# EUROPÄISCHE PATENTSCHRIFT

(11) **EP 3 724 624 B1**
(45) Veröffentlichungstag und Bekanntmachung des Hinweises auf die Patenterteilung: **10.01.2024**
(21) Anmeldenummer: 18803655.2
(22) Anmeldetag: 14.11.2018
(51) Int. Cl.: G01K 7/20, G01K 15/00, G01K 7/16

(54) **VORRICHTUNG ZUR BESTIMMUNG UND/ODER ÜBERWACHUNG EINER TEMPERATUR**
APPARATUS FOR DETERMINING AND/OR MONITORING TEMPERATURE
APPAREIL POUR DÉTERMINER ET/OU SURVEILLER LA TEMPÉRATURE

(30) Priorität: 15.12.2017 DE 102017130135
(43) Veröffentlichungstag der Anmeldung: 21.10.2020
(73) Patentinhaber: Endress+Hauser Wetzer GmbH+Co. KG, 87484 Nesselwang (DE)
(72) Erfinder: PEUKER, Christian, 87509 Immenstadt (DE); KORN, Michael, 87616 Marktoberdorf (DE); VRDOLJAK, Pavo, 87484 Nesselwang (DE)
(74) Vertreter: Koslowski, Christine Adelheid
(86) Internationale Anmeldenummer: PCT/EP2018/081153
(87) Internationale Veröffentlichungsnummer: WO 2019/115118

(56) Entgegenhaltungen:
- DE-A1- 3 022 942
- DE-A1-102012 107 090
- US-A1- 2010 198 546

## Beschreibung

Die Erfindung bezieht sich auf eine Vorrichtung zur Bestimmung und/oder Überwachung der Temperatur eines Mediums mit zwei Sensorelementen und einer Elektronik. Das Medium befindet sich dabei in einem Behältnis, beispielsweise ein Behälter oder eine Rohrleitung und die Vorrichtung ist beispielsweise in das Behältnis einbringbar oder an das Behältnis anbringbar.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Pyrometern zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Thermometer mit Widerstandselementen umfassen häufig sogenannte Dünnschicht-Sensorelemente, englisch Resistance Temperature Detectors (RTD). Üblicherweise hat ein solches Sensorelement ein Trägersubstrat, das mit Anschlussdrähten versehen ist und auf einer vorderen Oberfläche metallisch beschichtet ist. Auf der Rückseite kann ebenfalls eine metallische Beschichtung vorhanden sein. Als Sensorelemente werden beispielsweise Platinelemente verwendet, die unter anderem unter den Bezeichnungen PT10, PT100, und PT1000 auch kommerziell erhältlich sind.

In vielen Fällen werden die Sensorelemente gekapselt oder eingebettet, bevorzugt in reinen Keramikpulvern und die Anschlussleitungen in einem Führungsrohr zu einer Elektronik, beispielsweise einem Temperaturtransmitter, geführt.

Aus dem Stand der Technik sind verschiedene Messprinzipien zur Bestimmung der Temperatur mittels eines Widerstandselements bekannt geworden. Details zu industriellen Platin-Widerstandsthermometern können beispielsweise der europäischen Norm EN60751 entnommen werden. Ein Sendesignal, üblicherweise in Form eines elektrischen Stroms, wird in das Sensorelement eingeprägt und ein Empfangssignal, üblicherweise in Form einer über dem Sensorelement abfallenden Spannung, wird detektiert und bezüglich der Temperatur ausgewertet. Im einfachsten Fall erfolgt die Temperaturbestimmung mittels eines temperaturabhängigen Widerstands über das sogenannte Zweileiter-Messprinzip, bei welchem das Sensorelement über zwei Anschlussdrähte kontaktiert wird. Nachteilig ist bei dieser Lösung, dass der Widerstand der Anschlussdrähte als Fehler in die Temperaturbestimmung einfließt. Beim Dreileiter-Messprinzip wird das Sensorelement über drei Anschlussdrähte kontaktiert. Durch einen paarweisen Abgriff der abfallenden Spannung zwischen je zwei der drei Anschlussdrähten kann ein Widerstand der Anschlussdrähte bzw. der Leitungen weitgehend kompensiert werden, sofern davon ausgegangen werden kann, dass die Leitungswiderstände der drei Anschlussdrähte jeweils gleich sind.

Die höchste Messgenauigkeit ist mittels des sogenannten Vierleiter-Messprinzips erreichbar. Das Sensorelement wird über vier Anschlussdrähte kontaktiert, wobei über ein erstes Paar von Anschlussdrähten das Sendesignal in das Sensorelement eingeprägt wird, und wobei über ein zweites Paar von Anschlussdrähten das Empfangssignal empfangen wird. Bei Verwendung des Vierleiter-Messprinzips können auch ggf.-vorliegende Asymmetrien bezüglich der Leitungswiderstände der verschiedenen Anschlussdrähte kompensiert werden.

Zur Erhöhung der Ausfallsicherheit und/oder Messgenauigkeit ist es aus dem Stand der Technik bekannt geworden, ein Thermometer redundant auszugestalten. Einerseits können mehrere Thermometer gleichzeitig verwendet werden. Bekannt geworden sind aber auch Thermometer mit zumindest zwei Temperatursensoren, welche beispielsweise in einem einzigen Sensorkopf bzw. Messeinsatz angeordnet sind. Fällt einer der beiden Temperatursensoren aus, kann die Temperatur mittels desselben Thermometers über den zweiten Temperatursensor immer noch bestimmt werden. Entsprechende Thermometer werden, je nach Art der verwendeten Sensorelemente, beispielsweise als "Doppel-pt100" oder auch "Doppel-pt1000" bezeichnet.

Bei Thermometern mit mehreren Temperatursensoren, insbesondere in Form von Widerstandselementen, kann es problematisch sein, dass jeder einzelne Temperatursensor separat mittels Anschlussleitungen kontaktiert werden muss. Mit zunehmender Anzahl von Temperatursensoren in einem Thermometer steigt entsprechend die Anzahl der benötigten Anschlussleitungen, wobei sowohl die Baugröße des Thermometers als auch die Komplexität der Elektronik zunimmt.

Die Anzahl der zu führenden Anschlussleitungen steigt dabei außerdem je nach angewendeten Messprinzip unterschiedlich stark an. Das Vierleiter-Messprinzip ist, angesichts der normalerweise üblichen Bemessungen für industrielle Thermometer-Messeinsätze, insbesondere der Dimensionierungen der Führungsrohre zur Führung der Anschlussleitungen zur Elektronik, bereits bei zwei Temperatursensoren in einem Messeinsatz nur noch sehr schwer realisierbar, da in diesem Falle bereits acht Anschlussleitungen zur Elektronik geführt werden müssen. Dabei muss eine elektrische Isolation zwischen den verschiedenen Anschlussdrähten sowie gegenüber dem Führungsrohr über die gesamte Distanz vom jeweiligen Temperatursensor zur Elektronik gewährleistet sein.

Um einen guten Kompromiss zwischen den üblichen Anforderungen bezüglich der Dimensionierung des jeweiligen Thermometers und der erreichbaren Messgenauigkeit erzielen zu können, werden Thermometer mit zumindest zwei Temperatursensoren üblicherweise gemäß dem Dreileiter-Messprinzip ausgeführt. In diesem Falle müssen für ein Thermometer mit zwei Temperatursensoren beispielsweise sechs Anschlussleitungen zur jeweiligen Elektronik geführt werden.

Zur Verringerung der Baugröße einer Anordnung mit zwei Temperatursensoren ist es alternativ aus der DE102011084320A1 bekannt geworden, das jeweilige Sensorelement mit einem hochfrequenten elektrischen Signal einer für das jeweilige Sensorelement vorgegebenen Frequenz zu beaufschlagen. Aus dem reflektierten Messsignal kann dann eine Impedanz bestimmt werden, welche eine Funktion der Temperatur ist. Auf diese Weise können zwei Messelemente mit einem einzigen Anschlussleitungspaar verwendet werden. Eine derartige Elektronik ist jedoch vergleichsweise aufwendig und komplex.

DE 30 22 942 A1, DE 10 2012 107090 A1 und US 2010/198546 A1 offenbaren jeweils Vorrichtungen, die zwei Temperatursensoren mit einer Mehrzahl von Anschlussleitungen mit einer Elektronik verbinden, so dass sie gemäß dem Drei- oder Vierleiterprinzip betrieben werden können.

Der vorliegenden Erfindung liegt die Aufgabe zugrunde, eine Möglichkeit anzugeben, die Messgenauigkeit eines Thermometers mit zumindest zwei Temperatursensoren bei möglichst kompakter Bauweise auf möglichst einfache Art und Weise zu erhöhen. Diese Aufgabe wird gelöst durch eine Vorrichtung zur Bestimmung und/oder Überwachung der Temperatur entsprechend Anspruch 1.

Bei zumindest einem Temperatursensor, insbesondere bei beiden Temperatursensoren, handelt es sich bevorzugt um Widerstandselemente, beispielsweise um Platinelemente.

Bei der Elektronik handelt es sich wiederum beispielsweise um einen Temperatur-Transmitter.

Das erfindungsgemäße Thermometer kann beispielsweise als Temperatur-Messeinsatz dienen, wobei die Anschlussleitungen in einem Führungsrohr geführt sind, welches wiederum direkt mit dem jeweiligen Medium in Kontakt gebracht werden kann. Das Führungsrohr kann zumindest teilweise mit einem isolierenden Material, beispielsweise einem Keramikpulver ausgefüllt sein.

Ebenso ist es aber denkbar, zusätzlich ein Schutzrohr vorzusehen, welches mit dem Medium in Kontakt gebracht werden kann, und in welchem Schutzrohr zumindest die beiden Temperatursensoren und zumindest teilweise auch die Anschlussdrähte angeordnet sind.

Die erfindungsgemäße Vorrichtung ermöglicht einen platzsparenden, kompakten Aufbau durch eine Reduktion der Anzahl der zur Elektronik geführten Anschlussleitungen. Mittels zumindest einer der zumindest sechs Anschlussleitungen erfolgt eine Verbindung der beiden Temperatursensoren, sodass von den zumindest sechs Anschlussleitungen lediglich zumindest fünf Anschlussleitungen zur Elektronik geführt werden. Durch die Realisierung einer Reihenschaltung der beiden Temperatursensoren und weil von jedem Temperatursensor einzeln ein Empfangssignal abgegriffen werden kann, lässt sich mit der erfindungsgemäßen Vorrichtung trotz der kompakten Bauweise auf einfache Art und Weise eine hohe Messgenauigkeit erzielen. Gleichzeitig kann eine Ausfallsicherheit der Vorrichtung gewährleistet werden. Fällt einer der beiden Temperatursensoren aus, kann die Temperatur weiterhin gemäß dem Dreileiter-Messprinzip mit dem anderen funktionstüchtigen Temperatursensor bestimmt und/oder überwacht werden.

Erfindungsgemäß verläuft eine erste Anschlussleitung von der Elektronik zum ersten Temperatursensor, eine zweite Anschlussleitung vom ersten zum zweiten Temperatursensor, und eine dritte Anschlussleitung vom zweiten Temperatursensor zur Elektronik.

Hierdurch kann die Reihenschaltung der beiden Temperatursensoren auf einfache Art und Weise realisiert werden.

Weiterhin verläuft erfindungsgemäß eine vierte Anschlussleitung vom ersten Temperatursensor zur Elektronik und eine fünfte Anschlussleitung vom zweiten Temperatursensor zur Elektronik.

Erfindungsgemäß verläuft weiterhin eine sechste Anschlussleitung die Elektronik mit der zweiten Anschlussleitung.

Vorteilhaft können für diese Ausgestaltung die beiden Temperatursensoren gemäß dem Vierleiter-Messprinzip betrieben werden, obwohl lediglich fünf Anschlussleitungen zur Elektronik geführt werden. Im Falle des Ausfalls von einem der beiden Temperatursensoren kann der jeweils noch funktionsfähige Temperatursensor noch gemäß des Dreileiter-Messprinzips betrieben werden. Erfindungsgemäß ist zwischen der vierten und sechsten Anschlussleitung ein erstes Empfangssignal vom ersten Temperatursensor und zwischen der fünften und sechsten Anschlussleitung ein zweites Empfangssignal vom zweiten Temperatursensor abgreifbar.

Erfindungsgemäß weist die Elektronik eine erste Spannungsbestimmungseinheit zum Abgreifen des ersten Empfangssignals von dem ersten Temperatursensor und eine zweite Spannungsbestimmungseinheit zum Abgreifen des zweiten Empfangssignals von dem zweiten Temperatursensor auf.

Erfindungsgemäß ist die erste Spannungsbestimmungseinheit dazu ausgestaltet, das erste Empfangssignal zwischen der vierten und sechsten Anschlussleitung abzugreifen, und die zweite Spannungsbestimmungseinheit ist dazu ausgestaltet, das zweite Empfangssignal zwischen der fünften und sechsten Anschlussleitung abzugreifen.

Eine bevorzugte Ausgestaltung der erfindungsgemäßen Vorrichtung beinhaltet, dass die Elektronik eine einzige Stromerzeugungseinheit zum Erzeugen des Sendesignals und zumindest ein Schaltelement aufweist.

In einer ersten Schaltposition des Schaltelements ist dann beispielsweise der erste Temperatursensor mit dem Sendesignal beaufschlagbar, während in einer zweiten Schaltposition des Schaltelements der zweite Temperatursensor mit dem Sendesignal beaufschlagbar ist. Bevorzugt ist ferner eine dritte Schaltposition des Schaltelements vorgesehen, in welcher beide Temperatursensoren mit dem Sendesignal beaufschlagbar sind.

Sowohl ein einzelnes Schaltelement mit zumindest zwei, bevorzugt drei Schaltpositionen, oder auch zumindest zwei Schaltelemente mit jeweils zumindest zwei Schaltpositionen sind im Rahmen der vorliegenden Erfindung denkbar.

Es ist von Vorteil, wenn das zumindest eine Schaltelement derart angeordnet und ausgestaltet ist, dass vermittels des Schaltelements eine elektrische Verbindung zwischen der ersten und sechsten Anschlussleitung und/oder zwischen der dritten und sechsten Anschlussleitung herstellbar ist.

Die Elektronik kann beispielsweise derart ausgestaltet sein, dass sie anhand des jeweils in den unterschiedlichen Schaltpositionen empfangenen Empfangssignals erkennen kann, ob einer der beiden Temperatursensoren defekt ist. Auch können die Elektronik und/oder das zumindest eine Schaltelement derart ausgestaltet sein, dass das Schaltelement vermittels der Elektronik betätigbar ist, dass die verschiedenen Schaltpositionen also vermittels der Elektronik einstellbar sind.

Im Falle eines Ausfalls von einem der beiden Temperatursensoren kann durch geeignete Betätigung des Schaltelements die Bestimmung und/oder Überwachung der Temperatur mit dem jeweils funktionstüchtigen Sensor fortgesetzt werden. Dabei kann gewährleistet werden, dass die Temperatur zumindest gemäß dem Dreileiter-Messprinzip durchführbar ist. Auf einen Defekt des jeweils angesteuerten Temperatursensors kann beispielsweise geschlossen werden, wenn in einer der Schaltpositionen kein Empfangssignal mehr empfangen wird.

In einer alternativen bevorzugten Ausgestaltung der erfindungsgemäßen Vorrichtung weist die Elektronik eine erste und eine zweite Stromerzeugungseinheit auf. Beide Stromerzeugungseinheiten dienen der Erzeugung des zumindest einen Sendesignals.

Es ist hierbei von Vorteil, wenn die erste und zweite Stromerzeugungseinheit in Reihe geschaltet und mittels einer siebten Anschlussleitung miteinander verbunden sind.

Ebenso ist es von Vorteil, wenn die sechste Anschlussleitung die zweite und siebte Anschlussleitung miteinander verbindet. Die beiden Stromerzeugungseinheiten befinden sich in diesem Falle auf gegenüberliegenden Seiten des Knotenpunktes der sechsten und siebten Anschlussleitung.

Im Falle, dass beide Temperatursensoren funktionstüchtig sind, verbleibt die sechste Anschlussleitung in dieser Ausgestaltung vorteilhaft stromlos, sofern mittels der beiden Stromerzeugungseinheiten jeweils im Wesentlichen derselbe Strom erzeugt wird.

In einer Ausgestaltung der erfindungsgemäßen Vorrichtung sind die erste Stromerzeugungseinheit und die erste Spannungsbestimmungseinheit in einer ersten Elektronik -Einheit angeordnet, wobei die zweite Stromerzeugungseinheit und die zweite Spannungsbestimmungseinheit in einer zweiten Elektronik-Einheit angeordnet sind.

In einer alternativen Ausgestaltung der erfindungsgemäßen Vorrichtung sind die erste und zweite Stromerzeugungseinheit und die erste und zweite Spannungsbestimmungseinheit gemeinsam in der gleichen Elektronik angeordnet.

In einer besonders bevorzugten Ausgestaltung umfasst die erfindungsgemäße Vorrichtung eine achte Anschlussleitung, welche achte Anschlussleitung von der zweiten Anschlussleitung zur Elektronik verläuft. In dieser Ausgestaltung werden insgesamt zumindest sechs Anschlussleitungen zur Elektronik geführt. Vorteilhaft lässt sich für eine Ausgestaltung mit einer achten Anschlussleitung jedoch vorteilhaft gewährleisten, dass die Vorrichtung im Falle des Ausfalls von einem der beiden Temperatursensoren stets gemäß dem Vierleiter-Messprinzip betreiben lässt, was zu einer weiteren Erhöhung der erzielbaren Messgenauigkeit der Vorrichtung führt. Dies gilt auch im Falle des Ausfalls von einem der beiden Temperatursensoren.

Es ist für diese Ausgestaltung von Vorteil, wenn die erste Spannungsbestimmungseinheit dazu ausgestaltet ist, das erste Empfangssignal zwischen der vierten und achten Anschlussleitung abzugreifen, und wobei die zweite Spannungsbestimmungseinheit dazu ausgestaltet ist, das zweite Empfangssignal zwischen der fünften und achten Anschlussleitung abzugreifen. Im Falle, dass beide Temperatursensoren funktionstüchtig sind, bleibt, wie in den zuvor beschriebenen Ausführungsbeispielen, die siebte Anschlussleitung stromlos.

Anhand der nachfolgendend beschriebenen Figuren wird die Erfindung näher erläutert. Es zeigen:
Fig. 1 eine schematische Skizze eines Thermometers mit zwei Temperatursensoren gemäß (a) dem Zweileiter-Messprinzip, (b) dem Dreileiter-Messprinzip und (c) dem Vierleiter-Messprinzip gemäß Stand der Technik,
Fig. 2 eine schematische Zeichnung erfindungsgemäßen Thermometers mit fünf zur Elektronik geführten Anschlussleitungen,
Fig. 3 eine schematische Zeichnung erfindungsgemäßen Thermometers mit fünf zur Elektronik geführten Anschlussleitungen und einer einzigen Stromerzeugungseinheit,
Fig. 4 eine schematische Zeichnung erfindungsgemäßen Thermometers mit fünf zur Elektronik geführten Anschlussleitungen und zwei Stromerzeugungseinheiten, welche (a) in einer gemeinsamen Elektronik und (b) in zwei Elektronik-Einheiten angeordnet sind, und
Fig 5 eine schematische Zeichnung erfindungsgemäßen Thermometers mit sechs zur Elektronik geführten Anschlussleitungen.

In der nachfolgenden Beschreibung sind gleiche Elemente mit gleichen Bezugszeichen versehen.

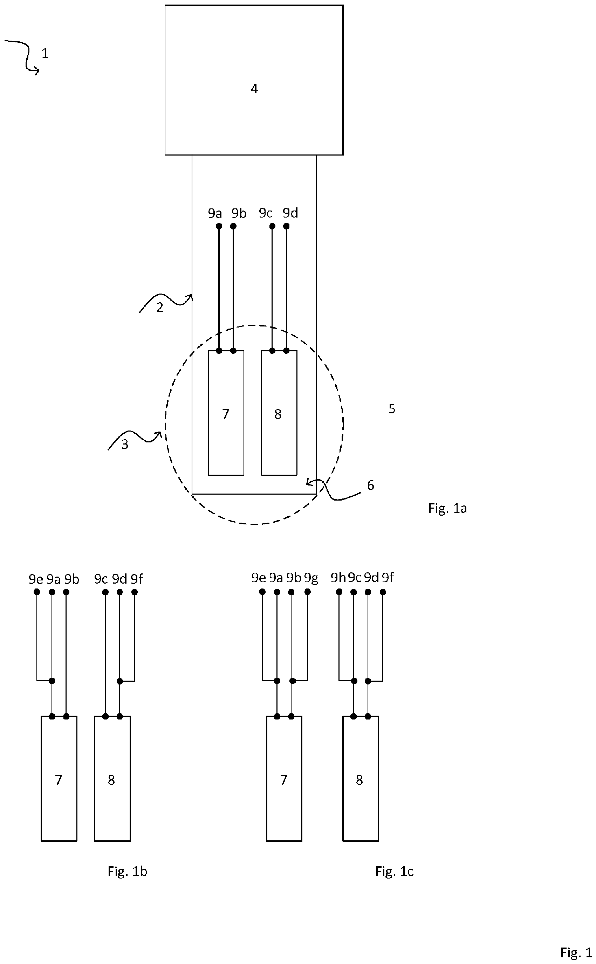

In Fig.1 sind verschiedene schematische Abbildung eines Thermometers 1 gemäß Stand der Technik gezeigt. In Fig. 1a ist ein Thermometer 1 mit einem Schutzrohr 2 und einer Elektronik 4, insbesondere ein Temperatur-Transmitter, gezeigt. Der dem jeweiligen Medium 5 zugewandte Teilbereich des Schutzrohres 2 wird auch als Sensorkopf 3 bezeichnet. Das Innenvolumen des Sensorkopfes 3 ist mit einem, insbesondere elektrisch isolierenden, Füllstoff 6, insbesondere einem Zement, gefüllt.

Ferner sind im Inneren des Sensorkopfes 3 ein erster Temperatursensor 7 und ein zweiter Temperatursensor 8 angeordnet, welche jeweils über zwei Anschlussdrähten 9a,9b bzw. 9c,9d, elektrisch kontaktiert sind, welche zur Elektronik 4 geführt sind. Andere Ausgestaltungen können beispielsweise ein Führungsrohr zur Führung der Anschlussdrähte 9a-9d umfassen. Bei den Temperatursensoren 7 und 8 handelt es sich beispielsweise um, insbesondere baugleiche, Widerstandselemente.

Das in Fig. 1a gezeigte Thermometer wird gemäß dem in der Beschreibungseinleitung bereits erwähnten, aus dem Stand der Technik bestens bekannten, Zweileiter-Messprinzip betrieben. Zur Kompensation des Einflusses der, insbesondere ohmschen, Leitungswiderstände der Anschlussleitungen 9a-9d empfiehlt sich jedoch die Verwendung des Dreileiter- oder Vierleiter- Messprinzips, wie in den Figuren Fig. 1b und Fig. 1c dargestellt. Bei Anwendung des Dreileiter-Messprinzips, wie in Fig. 1b illustriert, sind im Falle, dass das Thermometer 1 über zwei Temperatursensoren 7 und 8 verfügt, bereits sechs Anschlussleitungen notwendig; bei Anwendung des Vierleiter-Messprinzips, wie in Fig. 1c illustriert, sind sogar acht Anschlussleitungen erforderlich. Dies stellt höchste Anforderung an die geometrischen Ausgestaltungen des Thermometers. Beispielsweise muss gewährleistet werden, dass die Anschlussdrähte 9a-9f stets gegeneinander und gegenüber dem Führungsrohr elektrisch isoliert sind. Hinzu kommt, dass handelsübliche Schutzrohre und/oder Führungsrohre üblicherweise nur Durchmesser von bis zu 3mm aufweisen.

Die vorliegende Erfindung begegnet dieser Problematik, indem sie ein Thermometer mit zumindest zwei Temperatursensoren bereitstellt, welches eine möglichst kompakte Bauweise aufweist, und mittels welchem gleichzeitig eine hohe Messgenauigkeit erzielbar ist. Insbesondere können Einflüsse von Leitungswiderstände der Anschlussleitungen auf die Temperaturbestimmung und/oder -überwachung berücksichtigt bzw. kompensiert werden.

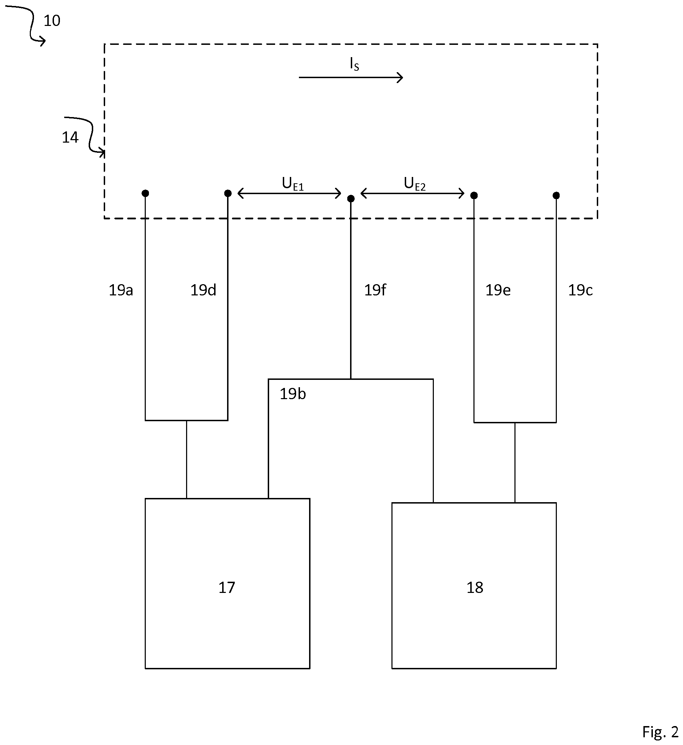

Erfindungsgemäß wird, wie anhand der Figuren Fig. 2-5 noch im Detail erläutert wird, bei gleichzeitiger Gewährleistung einer hohen Messgenauigkeit, die Anzahl der zur Elektronik 14 geführten Anschlussleitungen 19 reduziert. Hierzu werden die beiden Temperatursensoren 17, 18 in Reihe geschaltet. Trotzdem wird gewährleistet, dass von jedem Temperatursensor 17,18 einzeln ein Empfangssignal abgegriffen werden kann.

Durch diese Maßnahme kann jeder der beiden Temperatursensoren 17, 18, insbesondere im Falle eines Ausfalls einer der beiden Temperatursensoren 17, 18 einzeln betrieben werden.

Eine erste mögliche Ausgestaltung einer erfindungsgemäßen Ausgestaltung ist Gegenstand von Fig. 2. Eine erste Anschlussleitung 19a führt von der Elektronik 14 zum ersten Temperatursensor 17, eine zweite Anschlussleitung 19b vom ersten 17 zum zweiten Temperatursensor 18, und eine dritte Anschlussleitung 19c vom zweiten Temperatursensor 18 zurück zur Elektronik 14. Mittels der drei Anschlussleitungen 19a-19c wird also eine Reihenschaltung der beiden Temperatursensoren 17, 18 realisiert. Die Elektronik 14 ist dazu ausgestaltet ein Sendesignal Is zu erzeugen, welches den beiden Temperatursensoren 17, 18 eingeprägt werden kann. Beispielsweise verfügt sie zu diesem Zweck über zumindest eine Stromerzeugungseinheit [in Fig. 2 nicht eingezeichnet].

Außerdem verläuft eine vierte Anschlussleitung 19d vom ersten Temperatursensor 17 zur Elektronik 14, eine fünfte Anschlussleitung 19e vom zweiten Temperatursensor 18 zur Elektronik 14, und eine sechste Anschlussleitung 19f von der zweiten Anschlussleitung 19b zur Elektronik 14. Die Elektronik 14 wiederum ist dazu ausgestaltet, ein erstes Empfangssignal U_{E1} zwischen der vierten 19d und sechsten Anschlussleitung 19f und ein zweites Empfangssignal U_{E2} zwischen der sechsten 19f und fünften Anschlussleitung 19e abzugreifen. Beispielsweise verfügt die Elektronik 14 zu diesem Zweck über zumindest eine Spannungsbestimmungseinheit [in Fig. 2 nicht eingezeichnet].

Fällt einer der beiden Temperatursensoren 17 oder 18 aus, so kann mit dem Thermometer 1 weiterhin über den jeweils noch funktionstüchtigen Temperatursensor 17 oder 18 die Temperatur bestimmt und/oder überwacht werden. Das erfindungsgemäße Thermometer verfügt also über eine Ausfallsicherheit. Gleichzeitig ist in jedem Fall gewährleistet, dass die Bestimmung und/oder Überwachung mindestens gemäß dem Dreileiter-Messprinzip erfolgt, so dass in jedem Falle der ggf. vorhandene Einfluss der Leitungswiderstände der Anschlussleitungen 19a-19f berücksichtigt werden soll. Gleichzeitig sind gegenüber aus dem Stand der Technik bekannten Vorrichtungen erfindungsgemäß für die Ausgestaltung gemäß Fig. 2 lediglich fünf Anschlussleitungen 19a, und 19c-19f zur Elektronik 14 geführt.

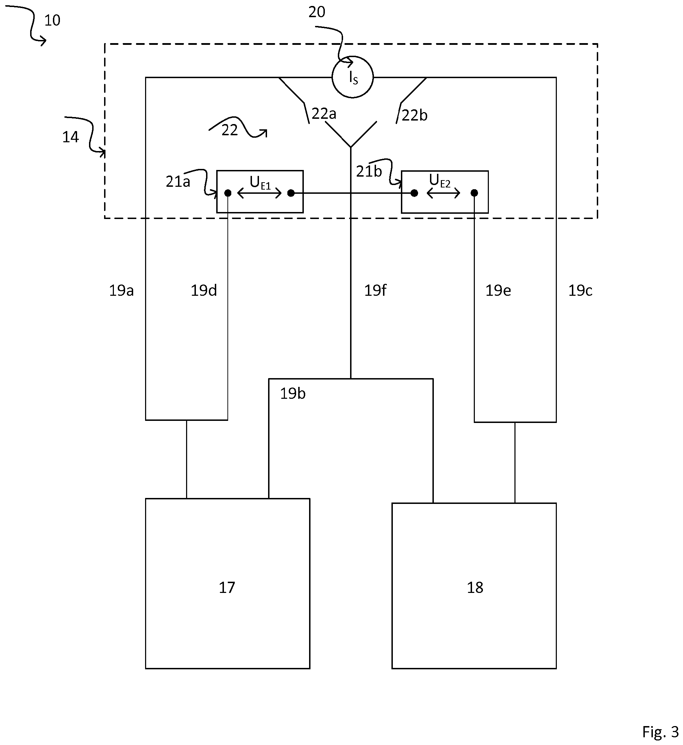

Eine weitere Ausgestaltung der vorliegenden Erfindung ist in Fig. 3 gezeigt. Auf in Zusammenhang mit Fig. 2 erläuterte Bezugszeichen wird hier nicht erneut eingegangen. Die Elektronik 14 verfügt über eine Stromerzeugungseinheit 20 zur Erzeugung eines Sendesignals I_{S}, sowie über eine erste Spannungsbestimmungseinheit 21a zum Abgreifen des ersten Empfangssignals U_{E1} vom ersten Temperatursensor 17 und eine zweite Spannungsbestimmungseinheit 21b zum Abgreifen des zweiten Empfangssignals U_{E2} vom zweiten Temperatursensor 18.

Ferner umfasst die Elektronik 14 ein Schaltelement 22 mit einem ersten 22a und zweiten 22b Schalter. Alternativ kann die Elektronik 14 auch über ein einziges Schaltelement 22 oder über zumindest zwei Schaltelemente 22 verfügen. Das Schaltelement 22 verfügt über zumindest zwei Schaltpositionen. Im Falle der Fig. 2 kann vermittels des ersten Schalters 22a je nach dessen aktueller Schaltposition eine elektrische Verbindung zwischen der ersten 19a und sechsten Anschlussleitung 19f hergestellt oder unterbrochen werden. Analog kann vermittels des zweiten Schalters 22b je nach dessen aktueller Schaltposition eine elektrische Verbindung zwischen der dritten 19c und sechsten Anschlussleitung 19f hergestellt oder unterbrochen werden.

Bevorzugt ist die Elektronik 14 dazu ausgestaltet, dass sie anhand der jeweils in den unterschiedlichen Schaltpositionen der beiden Schalter 22a und 22b empfangenen Empfangssignale U_{E1} und U_{E2} erkennen kann ob einer der beiden Temperatursensoren 17, 18 defekt ist. Auch können die Elektronik 14 und/oder die beiden Schalter 22a, 22b derart ausgestaltet sein, dass die Schalter 22a und 22b vermittels der Elektronik 14 betätigbar ist, dass die Schaltpositionen (hier: offen oder geschlossen) der beiden Schalter 22a, 22b also vermittels der Elektronik 14 einstellbar sind. Mit der in Fig. 3 gezeigten Anordnung kann gewährleistet werden, dass auch im Falles eines Defekts an einem der beiden Temperatursensoren 17 oder 18 die Temperatur des Mediums zumindest gemäß dem Dreileiter-Messprinzip bestimmt und/oder überwacht werden kann. Beispielsweise können die beiden Schalter zu vorgebbaren Zeitpunkten, regelmäßig oder auf Bedarf, abwechselnd geschlossen werden, um zu überprüfen, ob einer der beiden Temperatursensoren 17 oder 18 ausgefallen ist. Kann beispielsweise vom jeweils überprüften Temperatursensor 17 oder 18 kein Empfangssignal U_{E1} oder U_{E2} mehr abgegriffen werden, so kann auf einen Ausfall des jeweiligen Temperatursensors 17 oder 18 geschlossen werden. Ein Ausfall kann aber auch auf viele andere Arten und Weisend detektiert werden. Beispielsweise können zu verschiedenen Zeitpunkten gemessene Empfangssignale U_{E1} oder U_{E2}, während der jeweilige Schalter 22a oder 22b geschlossen ist, miteinander verglichen werden. In diesem Falle kann anhand einer Abweichung über einen vorgebbaren Grenzwert hinaus auf einen Defekt von einem der beiden Temperatursensoren 17 oder 18 geschlossen werden. Auch lassen sich auf diese Art und Weise Verschlechterungen der Messgenauigkeit der beiden Temperatursensoren 17 oder 18 feststellen.

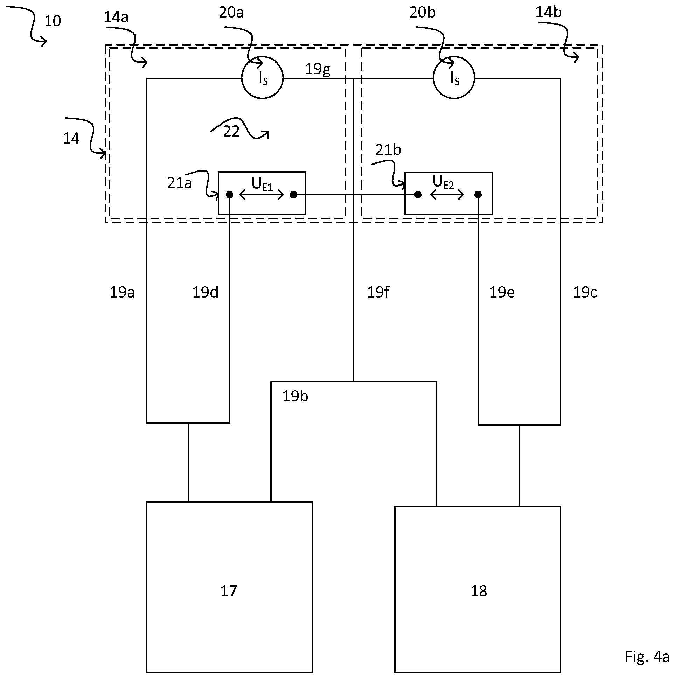

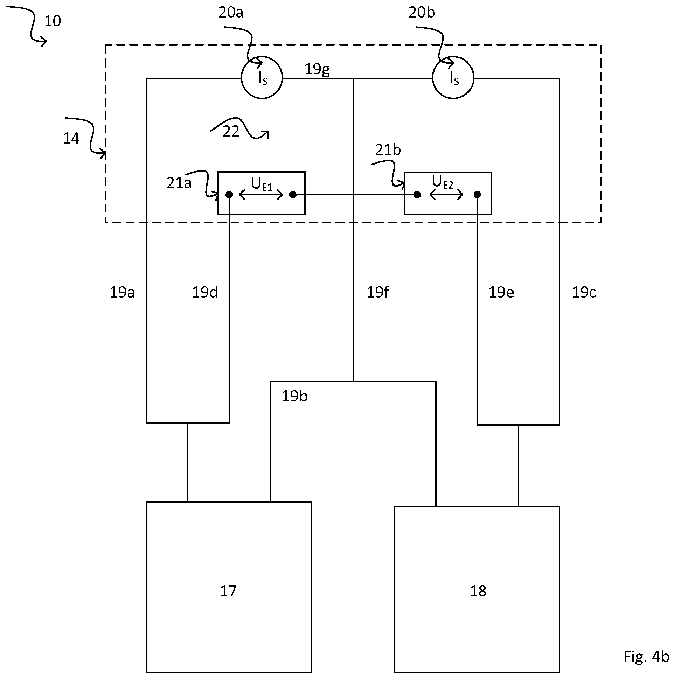

Eine alternative Ausgestaltung der Elektronik 14 ist in Fig. 4 gezeigt. Die Elektronik 14 verfügt über zwei Stromerzeugungseinheiten 20a und 20b, welche elektrisch in Reihe geschaltet und mittels einer siebten Anschlussleitung 19g miteinander verbunden sind. Die sechste Anschlussleitung 19f verläuft in diesem Falle zwischen der zweiten Anschlussleitung 19b und der siebten Anschlussleitung 19g, wobei die beiden Stromerzeugungseinheiten 20a und 20b auf gegenüberliegenden Seiten des Knotenpunkts zwischen der sechsten 19f und siebten Anschlussleitung 19g liegen. Einerseits kann die Elektronik 14 über zwei Einheiten 14a und 14b mit jeweils einer Stromerzeugungseinheit 20a bzw. 20b und jeweils einer Spannungsbestimmungseinheit 21a bzw. 21b verfügen, wie in Fig. 4a dargestellt. Ebenso ist es jedoch denkbar, dass beide Stromerzeugungseinheiten 20a und 20b sowie beide Spannungsbestimmungseinheiten 21a und 21b in einer einzigen bzw. derselben Elektronik 14 angeordnet sind, wie in Fig. 4b dargestellt. Auf in Zusammenhang mit anderen Figuren bereits erläuterte Bezugszeichen wird im Rahmen von der Erläuterung zu Fig. 4 nicht erneut im Detail eingegangen.

Für beide in Fig. 4 gezeigte Varianten sind die beiden Stromerzeugungseinheiten 20a und 20b und die beiden Temperatursensoren 17 und 18 mittels der ersten 19a, zweiten 19b, dritten 19c und siebten Anschlussleitung 19g in Reihe geschaltet. Im Falle, dass beide Temperatursensoren 17 und 18 funktionstüchtig sind, verbleibt die sechste Anschlussleitung 19f in beiden in Fig. 4 gezeigten Konfigurationen stromlos. Fällt dagegen einer der beiden Temperatursensoren 17 oder 18 aus, so fließt über die sechste Anschlussleitung 19f ein Strom und mittels des jeweils noch funktionstüchtigen Temperatursensors 17 oder 18 kann zumindest gemäß dem Dreileiter-Messprinzip weiterhin die Temperatur bestimmt und/oder überwacht werden. Die Erkennung eines Ausfalls von einem der beiden Temperatursensoren 17 oder 18 folgt in den gezeigten Konfigurationen vorteilhaft automatisch durch die spezielle Schaltungsanordnung.

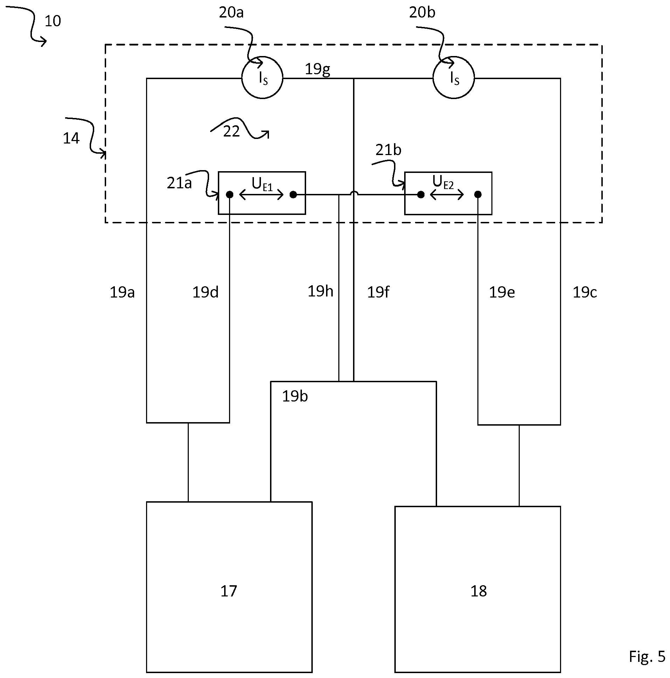

Eine weitere mögliche Ausgestaltung der vorliegenden Erfindung ist schließlich Gegenstand von Fig. 5. Auch hier verfügt die Elektronik 14 über zwei Stromerzeugungseinheiten 20a und 20b sowie über zwei Spannungsbestimmungseinheiten 21a und 21b. Es sei darauf verwiesen, dass sich die Ausgestaltung gemäß Fig. 5 auch in Kombination mit den zuvor gezeigten Ausführungsbeispielen gemäß den Figuren Fig. 2 - Fig. 4 kombinieren lässt. Wie bei den vorherigen Figuren auch wird im Rahmen von Fig. 5 auf bereits erläuterte Bezugszeichen nicht erneut im Detail eingegangen.

Zusätzlich zu den bisher gezeigten Ausführungsbeispielen weist die Ausgestaltung gemäß Fig. 5 eine achte Anschlussleitung 19h auf, welche, ähnlich wie die sechste Anschlussleitung 19f, von der zweiten Anschlussleitung 19b zur Elektronik 14 führt. Die erste Spannungsbestimmungseinheit 21a ist für diese Ausgestaltung dazu ausgestaltet, das erste Empfangssignal U_{E1} zwischen der vierten 19d und achten Anschlussleitung 19h abzugreifen. Analog ist die zweite Spannungsbestimmungseinheit 21b dazu ausgestaltet, das zweite Empfangssignal U_{E2} zwischen der fünften 19e und achten Anschlussleitung 19h abzugreifen.

Wie im Falle der Fig. 4 verbleibt die sechste Anschlussleitung 19f im Falle, dass beide Temperatursensoren 17 und 18 voll funktionstüchtig sind, stromlos. Im Falle, dass aber einer der beiden Temperatursensoren 17 oder 18 ausgefallen ist, fließt entlang der sechsten Anschlussleitung 19f ein elektrischer Strom.

Mittels der achten Anschlussleitung 19h lässt sich das Beaufschlagen der Temperatursensoren 17 und/oder 18 mittels des Sendesignals Is und das Abgreifen des jeweiligen Empfangssignals U_{E1} und/oder U_{E2} bezüglich der jeweils verwendeten Anschlussdrähte vollständig voneinander trennen. Es ist also sowohl im Falle, dass beide Temperatursensoren 17 und 18 funktionsfähig sind also auch im Falle, dass nur einer der beiden Temperatursensoren 17 oder 18 funktionstüchtig ist, vorteilhaft möglich, die Temperatur mittels des Vierleiter-Messprinzips zu bestimmen und/oder zu überwachen.

### Bezugszeichenliste

- 1: Thermometer
- 2: Schutzrohr
- 3: Sensorkopf
- 4: Elektronik
- 5: Medium
- 6: Füllstoff
- 7: Temperatursensor
- 8: Temperatursensor
- 9a-9f: Anschlussleitungen
- 10: Erfindungsgemäßes Thermometer
- 14, 14a, 14b: Elektronik bzw. Elektronik-Einheit
- 17: Erster Temperatursensor
- 18: Zweiter Temperatursensor
- 19a-19h: Anschlussleitungen
- 20,20a,20b: Stromerzeugungseinheit
- 21,21a,21b: Spannungsbestimmungseinheit
- 22,22a,22b: Schaltelement, Schalter

- I_{S}: Sendesignal
- U_{E1}: Erstes Empfangssignal
- U_{E2}: Zweites Empfangssignal

## Patentansprüche

1. Vorrichtung (1) zur Bestimmung und/oder Überwachung der Temperatur, umfassend
einen ersten Temperatursensor (17),
einen zweiten Temperatursensor (18),
eine Elektronik (14), welche dazu ausgestaltet ist,
den ersten (17) und den zweiten Temperatursensor (18) mit zumindest einem elektrischen Sendesignal (Is) in Form eines elektrischen Stroms zu beaufschlagen, und
zumindest ein erstes und zweites elektrisches Empfangssignal (U_{E1}, U_{E2}) in Form einer elektrischen Spannung von jeweils dem ersten (17) und dem zweiten Temperatursensor (18) abzugreifen,
und
zumindest sechs Anschlussleitungen (19a-19f) zur, insbesondere elektrischen, Kontaktierung des ersten (17) und zweiten Temperatursensors (18),
wobei die Anschlussleitungen (19a-19f) derart angeordnet und ausgestaltet sind,
dass der erste (17) und zweite Temperatursensor (18) in Reihe geschaltet und
mit dem Sendesignal (Is) beaufschlagbar sind, und
dass vom ersten Temperatursensor (17) das erste Empfangssignal (U_{E1}) und vom zweiten Temperatursensor (18) das zweite Empfangssignal (U_{E2}) abgreifbar ist, wobei die Empfangssignale (U_{E1};U_{E2}) einzeln abgreifbar sind, so dass jeder der beiden Temperatursensoren (17,18) einzeln betreibbar ist,
wobei eine erste Anschlussleitung (19a) von der Elektronik (14) zum ersten Temperatursensor (17), eine zweite Anschlussleitung (19b) vom ersten (17) zum zweiten Temperatursensor (18), und eine dritte Anschlussleitung (19c) vom zweiten Temperatursensor (18) zur Elektronik (18) verläuft,
wobei eine vierte Anschlussleitung (19d) vom ersten Temperatursensor (17) zur Elektronik (14) und eine fünfte Anschlussleitung (19e) vom zweiten Temperatursensor (18) zur Elektronik (14) verläuft,
wobei eine sechste Anschlussleitung (19f) die Elektronik (14) mit der zweiten Anschlussleitung (19b) verbindet,
wobei die Elektronik (14) eine erste Spannungsbestimmungseinheit (21a) zum Abgreifen des ersten Empfangssignals (U_{E1}) von dem ersten Temperatursensor (17) und eine zweite Spannungsbestimmungseinheit (21b) zum Abgreifen des zweiten Empfangssignals (U_{E2}) von dem zweiten Temperatursensor (18) aufweist, und wobei die erste Spannungsbestimmungseinheit dazu ausgestaltet ist, das erste Empfangssignal zwischen der vierten und sechsten Anschlussleitung abzugreifen, und wobei die zweite Spannungsbestimmungseinheit dazu ausgestaltet ist, das zweite Empfangssignal zwischen der fünften und sechsten Anschlussleitung abzugreifen.

2. Vorrichtung (1) nach zumindest einem der vorherigen Ansprüche,
wobei die Elektronik eine einzige Stromerzeugungseinheit (20) zum Erzeugen des Sendesignals (Is) und zumindest ein Schaltelement (22,22a,22b) aufweist.

3. Vorrichtung (1) nach Anspruch 2,
wobei das zumindest eine Schaltelement (22,22a,22b) derart angeordnet und ausgestaltet ist, dass vermittels des Schaltelements (22,22a,22b) eine elektrische Verbindung zwischen der ersten Anschlussleitung (19a) und der sechsten Anschlussleitung (19f) und zwischen der dritten Anschlussleitung (19c) und der sechsten Anschlussleitung (19f) herstellbar ist.

4. Vorrichtung (1) nach Anspruch 1,
wobei die Elektronik (14) eine erste (21a) und eine zweite Stromerzeugungseinheit (21b) zum Erzeugen des Sendesignals (Is) aufweist.

5. Vorrichtung (1) nach Anspruch 4
wobei die erste (21a) und zweite Stromerzeugungseinheit (21b) in Reihe geschaltet und mittels einer siebten Anschlussleitung (19g) miteinander verbunden sind.

6. Vorrichtung (1) nach Anspruch 5,
wobei die sechste Anschlussleitung (19f) die zweite (19b) und siebte Anschlussleitung (19g) miteinander verbindet.

7. Vorrichtung (1) nach einem der Ansprüche 4-6
wobei die erste Stromerzeugungseinheit (20a) und die erste Spannungsbestimmungseinheit (21a) in einer ersten Elektronik-Einheit (14a) angeordnet sind, und wobei die zweite Stromerzeugungseinheit (20b) und die zweite Spannungsbestimmungseinheit (21b) in einer zweiten Elektronik-Einheit (14b) angeordnet sind.

8. Vorrichtung (1) nach einem der Ansprüche 4-6,
wobei die erste (20a) und zweite Stromerzeugungseinheit (20b) und die erste (21b) und zweite Spannungsbestimmungseinheit (21b) gemeinsam in der gleichen Elektronik (14) angeordnet sind.

9. Vorrichtung (1) nach zumindest einem der vorherigen Ansprüche,
umfassend eine achte Anschlussleitung (19h), welche achte Anschlussleitung (19h) von der zweiten Anschlussleitung (19b) zur Elektronik (14) verläuft.

10. Vorrichtung (1) nach Anspruch 9,
wobei die erste Spannungsbestimmungseinheit (21a) dazu ausgestaltet ist, das erste Empfangssignal (U_{E1}) zwischen der vierten (19d) und achten Anschlussleitung (19h) abzugreifen, und wobei die zweite Spannungsbestimmungseinheit (21b) dazu ausgestaltet ist, das zweite Empfangssignal (U_{E2}) zwischen der fünften (19e) und achten Anschlussleitung (19h) abzugreifen.

## Claims

1. An apparatus (1) for determining and/or monitoring the temperature, comprising a
first temperature sensor (17),
a second temperature sensor (18),
an electronics assembly (14) which is configured to
apply at least one electrical transmission signal (Iₛ) to the first temperature sensor (17) and the second temperature sensor (18) in the form of an electrical current, and
tap off at least one first and second electrical reception signal (U_{E1}, U_{E2}) in the form of an electrical voltage from the first temperature sensor (17) and the second temperature sensor (18) respectively,
and
at least six connection lines (19a-19f) for the, in particular electrical, contacting of the first temperature sensor (17) and the second temperature sensor (18),
wherein the connection lines (19a-19f) are arranged and configured such
that the first temperature sensor (17) and the second temperature sensor (18) are connected in series and can have the transmission signal (Iₛ) applied to them, and
that the first reception signal (U_{E1}) can be tapped off from the first temperature sensor (17) and the second reception signal (U_{E2}) can be tapped off from the second temperature sensor (18), wherein the reception signals (U_{E1};U_{E2}) can be tapped off individually so that each of the two temperature sensors (17,18) can be operated individually,
wherein a first connection line (19a) runs from the electronics assembly (14) to the first temperature sensor (17), a second connection line (19b) runs from the first temperature sensor (17) to the second temperature sensor (18), and a third connection line (19c) runs from the second temperature sensor (18) to the electronics assembly (18),
wherein a fourth connection line (19d) runs from the first temperature sensor (17) to the electronics assembly (14) and a fifth connection line (19e) runs from the second temperature sensor (18) to the electronics assembly (14),
wherein a sixth connection line (19f) connects the electronics assembly (14) to the second connection line (19b),
wherein the electronics assembly (14) has a first voltage determination unit (21a) for tapping off the first reception signal (U_{E1}) from the first temperature sensor (17) and a second voltage determination unit (21b) for tapping off the second reception signal (U_{E2}) from the second temperature sensor (18), and
wherein the first voltage determination unit is configured to tap off the first reception signal between the fourth and sixth connection lines, and wherein the second voltage determination unit is configured to tap off the second reception signal between the fifth and sixth connection lines.

2. The apparatus (1) as claimed in at least one of the preceding claims,
wherein the electronics assembly has a single current generation unit (20) for generating the transmission signal (Iₛ) and at least one switching element (22,22a,22b).

3. The apparatus (1) as claimed in claim 2,
wherein the at least one switching element (22,22a,22b) is arranged and configured such that via the switching element (22,22a,22b) an electrical connection can be established between the first connection line (19a) and the sixth connection line (19f) and between the third connection line (19c) and the sixth connection line (19f).

4. The apparatus (1) as claimed in claim 1,
wherein the electronics assembly (14) has a first current generation unit (21a) and a second current generation unit (21b) for generating the transmission signal (Iₛ).

5. The apparatus (1) as claimed in claim 4,
wherein the first current generation unit (21a) and the second current generation unit (21b) are connected in series and are connected to one another by means of a seventh connection line (19g).

6. The apparatus (1) as claimed in claim 5,
wherein the sixth connection line (19f) connects the second connection line (19b) and the seventh connection line (19g) to one another.

7. The apparatus (1) as claimed in one of claims 4-6,
wherein the first current generation unit (20a) and the first voltage determination unit (21a) are arranged in a first electronics assembly unit (14a), and wherein the second current generation unit (20b) and the second voltage determination unit (21b) are arranged in a second electronics assembly unit (14b).

8. The apparatus (1) as claimed in one of claims 4-6,
wherein the first current generation unit (20a) and the second current generation unit (20b) and the first voltage determination unit (21b) and the second voltage determination unit (21b) are arranged together in the same electronics assembly (14).

9. The apparatus (1) as claimed in at least one of the preceding claims,
comprising an eighth connection line (19h), which eighth connection line (19h) runs from the second connection line (19b) to the electronics assembly (14).

10. The apparatus (1) as claimed in claim 9,
wherein the first voltage determination unit (21a) is configured to tap off the first reception signal (U_{E1}) between the fourth connection line (19d) and the eighth connection line (19h), and wherein the second voltage determination unit (21b) is configured to tap off the second reception signal (U_{E2}) between the fifth connection line (19e) and the eighth connection line (19h).

## Revendications

1. Dispositif (1) destiné à la détermination et/ou à la surveillance de la température, lequel dispositif comprend
un premier capteur de température (17),
un deuxième capteur de température (18),
une électronique (14), laquelle est conçue
pour appliquer au premier capteur de température (17) et au deuxième capteur de température (18) au moins un signal d'émission électrique (I_{S}) sous la forme d'un courant électrique, et
pour prélever au moins un premier et un deuxième signal de réception électrique (U_{E1}, U_{E2}) sous la forme d'une tension électrique respectivement du premier capteur de température (17) et du deuxième capteur de température (18),
et
au moins six lignes de raccordement (19a-19f) pour la mise en contact, notamment électrique, du premier capteur de température (17) et du deuxième capteur de température (18),
les lignes de raccordement (19a-19f) étant disposées et conçues de telle sorte
que le premier capteur de température (17) et le deuxième capteur de température (18) sont montés en série et peuvent être alimentés par le signal d'émission (I_{S}), et
que le premier signal de réception (U_{E1}) peut être prélevé du premier capteur de température (17) et le deuxième signal de réception (U_{E2}) du deuxième capteur de température (18), les signaux de réception (U_{E1} ; U_{E2}) pouvant être prélevés individuellement, de sorte que chacun des deux capteurs de température (17, 18) peut être exploité individuellement,
une première ligne de raccordement (19a) s'étendant de l'électronique (14) au premier capteur de température (17), une deuxième ligne de raccordement (19b) s'étendant du premier capteur de température (17) au deuxième capteur de température (18), et une troisième ligne de raccordement (19c) s'étendant du deuxième capteur de température (18) à l'électronique (14),
une quatrième ligne de raccordement (19d) s'étendant du premier capteur de température (17) à l'électronique (14) et une cinquième ligne de raccordement (19e) s'étendant du deuxième capteur de température (18) à l'électronique (14), une sixième ligne de raccordement (19f) reliant l'électronique (14) à la deuxième ligne de raccordement (19b),
l'électronique (14) présentant une première unité de détermination de tension (21a) destinée à prélever le premier signal de réception (U_{E1}) du premier capteur de température (17) et une deuxième unité de détermination de tension (21b) destinée à prélever le deuxième signal de réception (U_{E2}) du deuxième capteur de température (18), et
la première unité de détermination de tension étant conçue pour prélever le premier signal de réception entre la quatrième et la sixième ligne de raccordement, et
la deuxième unité de détermination de tension étant conçue pour prélever le deuxième signal de réception entre la cinquième et la sixième ligne de raccordement.

2. Dispositif (1) selon au moins l'une des revendications précédentes,
pour lequel l'électronique comprend une seule unité de génération de courant (20) pour générer le signal d'émission (I_{S}) et au moins un élément de commutation (22, 22a, 22b).

3. Dispositif (1) selon la revendication 2,
pour lequel l'au moins un élément de commutation (22, 22a, 22b) est disposé et configuré de telle sorte qu'une liaison électrique peut être établie au moyen de l'élément de commutation (22, 22a, 22b) entre la première ligne de raccordement (19a) et la sixième ligne de raccordement (19f) et entre la troisième ligne de raccordement (19c) et la sixième ligne de raccordement (19f).

4. Dispositif (1) selon la revendication 1,
pour lequel l'électronique (14) comprend une première unité de génération de courant (21a) et une deuxième unité de génération de courant (21b) pour générer le signal d'émission (I_{S}).

5. Dispositif (1) selon la revendication 4,
pour lequel la première unité de génération de courant (21a) et la deuxième unité de génération de courant (21b) sont montées en série et reliées entre elles au moyen d'une septième ligne de raccordement (19g).

6. Dispositif (1) selon la revendication 5,
pour lequel la sixième ligne de raccordement (19f) relie la deuxième ligne de raccordement (19b) et la septième ligne de raccordement (19g).

7. Dispositif (1) selon l'une des revendications 4 à 6,
pour lequel la première unité de génération de courant (20a) et la première unité de détermination de tension (21a) sont disposées dans une première unité électronique (14a), et
pour lequel la deuxième unité de génération de courant (20b) et la deuxième unité de détermination de tension (21b) sont disposées dans une deuxième unité électronique (14b).

8. Dispositif (1) selon l'une des revendications 4 à 6,
pour lequel la première unité de génération de courant (20a) et la deuxième unité de génération de courant (20b) et la première unité de détermination de tension (21b) et la deuxième unité de détermination de tension (21b) sont disposées ensemble dans la même électronique (14).

9. Dispositif (1) selon au moins l'une des revendications précédentes,
lequel dispositif comprend une huitième ligne de raccordement (19h), laquelle huitième ligne de raccordement (19h) s'étend de la deuxième ligne de raccordement (19b) à l'électronique (14).

10. Dispositif (1) selon la revendication 9,
pour lequel la première unité de détermination de tension (21a) est configurée pour prélever le premier signal de réception (U_{E1}) entre la quatrième ligne de raccordement (19d) et la huitième ligne de raccordement (19h), et
pour lequel la deuxième unité de détermination de tension (21b) est configurée pour prélever le deuxième signal de réception (U_{E2}) entre la cinquième ligne de raccordement (19e) et la huitième ligne de raccordement (19h).
